# EUROPÄISCHE PATENTANMELDUNG

(11) **EP 3 085 896 A1**
(43) Veröffentlichungstag der Anmeldung: **26.10.2016**
(21) Anmeldenummer: 15164856.5
(22) Anmeldetag: 23.04.2015
(51) Int. Cl.: F01D 5/20, F01D 5/28, F01D 5/00

(54) **Schaufelauflage, zugehörige Schaufel, Verfahren zum Herstellen und zur Reparatur**

(71) Anmelder: Siemens Aktiengesellschaft, 80333 München (DE)
(72) Erfinder: Ahmad, Fathi, 41564 Kaarst (DE); Menke, Christian, 45329 Essen (DE); Ott, Michael, 45470 Mülheim an der Ruhr (DE); Radulovic, Radan, 44799 Bochum (DE)

(57) **Zusammenfassung**

Eine Schaufelauflage (7) zum Aufbringen auf zumindest einen Abschnitt einer Oberfläche einer Schaufel (1) einer Strömungsmaschine weist eine Haftvermittlerschicht (8) und eine auf der Haftvermittlerschicht (8) aufgebrachte Hitzeschutzschicht (9) auf. Die Haftvermittlerschicht (8) ist dazu eingerichtet, die Hitzeschutzschicht (9) auf der Oberfläche der Schaufel (1) zu halten. Die Hitzeschutzschicht (9) ist dazu eingerichtet die Schaufel thermisch abzuschirmen.

## Beschreibung

Die Erfindung betrifft eine Schaufelauflage zum Aufbringen auf eine Schaufel einer Strömungsmaschine, insbesondere einer Lauf- oder Leitschaufel einer Gasturbine, sowie eine Schaufel für eine Strömungsmaschine mit Schaufelauflage. Die Schaufelauflage kann beispielsweise zur Herstellung oder Reparatur einer Beschichtung, insbesondere einer Hitzeschutzbeschichtung verwendet werden. Die Erfindung betrifft weiterhin ein Verfahren zum Herstellen einer Schaufelauflage sowie ein Verfahren zur Reparatur einer Hitzeschutzbeschichtung.

Lauf- und Leitschaufeln insbesondere einer Gasturbine sind in deren Betrieb sehr hohen Temperaturen von beispielsweise über 1000°C ausgesetzt. Um diesen Temperaturen Stand zu halten, werden die Schaufeln mit einer Hitzeschutzschicht thermisch isoliert. Üblicherweise wird die beispielsweise mehrschichtig ausgebildete Hitzeschutzschicht z.B. in einem Sprühverfahren oder Flammspritzprozess aufgebracht.

Je nach Gestaltung der Schaufelgeometrie bzw. der Schaufeloberfläche kann es problematisch sein, an schwer zugänglichen Bereichen der Schaufeloberfläche die Hitzeschutzschicht mit einer vorgeschriebenen Schichtdicke aufzubringen. Derartige Bereiche mit eingeschränkter Zugänglichkeit weist beispielsweise die Schaufelspitze mit dort möglicherweise vorgesehenen Nuten oder Einkerbungen auf. Hierdurch kann es zu Abweichungen von einer vorgegebenen Produktspezifikation kommen, die der Verwendbarkeit der Schaufel entgegenstehen. Insbesondere können Abschnitte der Schaufeloberfläche mit nicht ausreichender Hitzeschutzbeschichtung überhitzen, oxidieren und somit den in Betrieb auftretenden mechanischen Belastungen nicht mehr ausreichend standhalten. Hierdurch kommt es zu verkürzten Wartungsintervallen, erhöhtem Reparaturaufwand, erhöhten Austauschraten und insgesamt zu einer eingeschränkten Lebensdauer und erhöhten Betriebskosten.

Aufgabe der Erfindung ist es, eine Beschichtung für eine Schaufel und eine Schaufel sowie ein Verfahren zum Aufbringen der Beschichtung anzugeben, durch welche bzw. welches die Lebensdauer der Strömungsmaschine erhöht und Wartungskosten gesenkt werden können.

Diese Aufgabe wird durch eine Schaufelauflage, ein Verfahren zur Herstellung der Schaufelauflage, eine Schaufel, ein Verfahren zur Herstellung der Schaufelauflage und ein Verfahren zur Reparatur einer Hitzeschutzschicht gemäß den unabhängigen Patentansprüchen gelöst. Bevorzugte Ausführungsformen ergeben sich aus den abhängigen Patentansprüchen.

Eine Schaufelauflage zum Aufbringen auf zumindest einen Abschnitt einer Oberfläche einer Schaufel für eine Strömungsmaschine weist eine Haftvermittlerschicht und eine auf der Haftvermittlerschicht aufgebrachte Hitzeschutzschicht auf, wobei die Haftvermittlerschicht dazu eingerichtet ist, die Hitzeschutzschicht auf der Oberfläche der Schaufel zu halten, und wobei die Hitzeschutzschicht dazu eingerichtet ist, die Schaufel thermisch abzuschirmen.

Die Strömungsmaschine kann eine Gasturbine wie beispielsweise ein Flugtriebwerk oder eine Turbine für ein Kraftwerk sein. Die Schaufel kann als Lauf- oder Leitschaufel der Gasturbine dem heißen Gas innerhalb der Turbine ausgesetzt sein und daher eines besonderen Hitzeschutzes bedürfen.

Die erfindungsgemäße Schaufelauflage kann derart ausgebildet sein, dass sie auf einen Abschnitt der Oberfläche der Schaufel anordbar ist. Dieser Abschnitt kann auf der gesamten Oberfläche der Schaufel oder nur auf einem Teilbereich, beispielsweise auf einer Druck- oder Saugseite der Schaufel und/oder einem spezifischen Bereich insbesondere mit starken Krümmungen, Kanten, Nuten, Kerben oder Ausnehmungen wie beispielsweise auf der Schaufelspitze aufbringbar sein. Insbesondere im Bereich der Schaufelspitze am radial nach außen gerichteten Ende der Schaufel, welches entgegengesetzt zu dem mittels einer Scheibe an einer Welle der Strömungsmaschine befestigten Schaufelfuß befindlich ist, ist der Hitzeeintrag während des Betriebs der Strömungsmaschine besonders stark. Gleichzeitig ist es in diesem Bereich wegen der dort ausgebildeten Kante bzw. Kanten und der dort möglicherweise angebrachten Nut bzw. Nuten besonders schwierig, eine gleichmäßige, einen ausreichenden Hitzeschutz gewährleistende Beschichtung aufzubringen.

Mittels der Schaufelauflage, welche zunächst separat gefertigt und anschließend auf den entsprechenden Oberflächenabschnitt aufgebracht werden kann, kann auch diesem Bereich eine den Produktspezifikationen entsprechende, einen ausreichenden Hitzeschutz gewährleistende Hitzeschutzschicht erreicht werden.

Die Haftvermittlerschicht (englisch: bond coat, BC) kann als metallische Schicht beispielsweise mit einer MCrAlY-Verbindung ausgebildet sein und gewährleistet das Halten der Hitzeschutzschicht auf der Schaufeloberfläche und ein Oxidations- und Diffusionsschutz der Schaufeloberfläche. Die Hitzeschutzschicht (englisch: thermal barrier coat, TBC) kann zur thermischen Isolation beispielsweise ein keramisches Material aufweisen.

Durch das Bereitstellen einer von der Schaufel zunächst unabhängigen Schaufelauflage kann beispielsweise im Rahmen einer Schaufelneuherstellung oder einer Schaufelreparatur ein einfaches und gleichmäßiges Aufbringen der Haftvermittler- und Hitzeschutzschicht auf der Oberfläche der Schaufel gewährleistet werden. Hierdurch kann einerseits ein kostengünstiger Herstellungsprozess und gleichzeitig ein effektiver Reparaturprozess erreicht werden, der auch in Bereichen mit komplexer Oberflächenstruktur eine hohe Qualität der Beschichtung und damit eine hohe Lebensdauer der Schaufel bei niedrigen Wartungskosten ermöglicht.

Eine Ausführungsform weist eine auf einer von der Hitzeschutzschicht abgewandten Oberfläche der Haftvermittlerschicht angeordnete Fügeschicht auf, wobei die Fügeschicht dazu eingerichtet ist, die Haftvermittlerschicht auf die Oberfläche der Schaufel zu fügen.

Beispielsweise kann als Fügeschicht ein Hochtemperaturkleber, z.B. ein Hochtemperaturlot, aufgebracht werden, welches nach dem Aufbringen der Schaufelauflage auf den Oberflächenabschnitt der Schaufel beispielsweise in einem thermischen Anwendungs- bzw. Schmelzprozess ein Anfügen der Schaufelauflage an der Schaufeloberfläche ermöglicht.

Alternativ ist es möglich, die Fügeschicht nicht an der Schaufelauflage, sondern vor dem Anordnen der Schaufelauflage an dem Oberflächenabschnitt der Schaufel anzuordnen, um anschließend mittels der thermischen Anwendung die Schaufelauflage auf der Schaufeloberfläche anzufügen.

In einer Ausführungsform weisen die Haftvermittlerschicht und/oder die Hitzeschutzschicht jeweils eine vorbestimmte Schichtdicke auf.

Die Schichtdicke kann sich aus der Produktdefinition der Schaufel bzw. Schaufeloberfläche z.B. im Hinblick auf ihren Anwendungsbereich und die zu erwartenden Betriebsbedingungen der Strömungsmaschine ergeben. Insbesondere kann die Schichtdicke der Haftvermittlerschicht 0,1 mm bis 0,3 mm betragen, während die Schichtdicke der Hitzeschutzschicht 0,1 mm bis 0,6 mm beträgt. Toleranzbereiche beispielsweise im Bereich von +/- 0,05 mm können zulässig sein. Bei einer Herstellung der Schaufelauflage unabhängig von der Schaufeloberflächengeometrie kann eine definitionsgemäße Schichtdicke im Wesentlichen über die gesamte Breite der Auflage bei nur geringen Schwankungen sichergestellt werden, wodurch Toleranzen beispielsweise auf +/- 0,01 mm reduziert werden können.

In einer weiteren Ausführungsform kann die Haftvermittlerschicht biegbar sein und die Hitzeschutzschicht eine Mehrzahl von auf der Haftvermittlerschicht aneinander angrenzend angeordneten Hitzeschutzelementen aufweisen.

Die biegbare Ausgestaltung der Haftvermittlerschicht mit Anordnung der Hitzeschutzelemente nach Art einer Kachelschicht ermöglicht es, die Schaufelauflage derart elastisch und duktil zu gestalten, dass ein nachträgliches Anpassen an den Schaufeloberflächenabschnitt möglich ist. Demzufolge kann die Schaufelauflage mit einer im Wesentlichen ebenen, flachen bzw. planen Ausgestaltung unabhängig von der räumlichen Gestaltung des Schaufeloberflächenabschnitts ausgebildet werden. Die Schaufelauflage kann somit als Reparaturmedium für beliebige Schaufeln bzw. Schaufeloberflächenabschnitte bereitgestellt und vorgehalten werden.

In einer Variante können die Hitzeschutzelemente innerhalb der Hitzeschutzschicht eine polygonale, beispielsweise hexagonale Form aufweisen. Dies ermöglicht das Ausbilden einer Kachelstruktur, die getragen durch die biegbare Haftvermittlerschicht verschieden gekrümmte Schaufeloberflächenabschnitte derart ummanteln kann, dass Abstände zwischen angrenzend angeordneten Hitzeschutzelementen unterhalb eines vorgegebenen Schwellenwerts bleiben.

In einer weiteren Ausführungsform ist zwischen der Hitzeschutzschicht und der Haftvermittlerschicht wenigstens eine Übergangsschicht angeordnet, wobei die Übergangsschicht ein vorbestimmtes Mischungsverhältnis eines Materials der Hitzeschutzschicht und eines Materials der Haftvermittlerschicht hat.

Die Übergangsschicht weist somit eine Materialmischung der Materialien der Haftvermittler- und der Hitzeschutzschicht auf, was eine stabile Verbindung der aufeinander angeordneten Schichten bewirkt.

In einer Variante kann die Übergangsschicht mit zunehmendem Abstand von der Haftvermittlerschicht einen abnehmenden Anteil des Materials der Haftvermittlerschicht und einen zunehmenden Anteil des Materials der Hitzeschutzschicht aufweisen. Der Anteil des Materials der Haftvermittlerschicht kann dabei mit zunehmendem Abstand von der Haftvermittlerschicht kontinuierlich oder schrittweise abnehmen, ebenso wie der Anteil des Materials der Hitzeschutzschicht kontinuierlich oder schrittweise zunehmen kann.

Hierdurch wird ein kontinuierlicher oder schrittweise gradierter Übergang zwischen den Schichten mit anteiliger Materialzusammensetzung erreicht, welcher eine weitere Verbesserung der Kontakteigenschaften und damit der Beschichtungsstabilität ermöglicht.

In einer weiteren Ausführungsform bildet eine räumliche Anordnung der Haftvermittlerschicht und/oder der Hitzeschutzschicht den Abschnitt der Oberfläche der Schaufel im Wesentlichen nach. Insbesondere kann die Schaufelauflage derart räumlich gestaltet sein, dass sie dem Oberflächenabschnitt der Schaufel, auf den sie aufzubringen ist, im Wesentlichen angepasst ist.

Ein Aufbringen dieser Ausführungsform auf den Oberflächenabschnitt der Schaufel kann somit im Wesentlichen ohne Verformung der Schaufelauflage erreicht werden. Die Biegeelastizität einer derartigen Schaufelauflage kann daher in den Hintergrund treten, während eine noch massivere Ausgestaltung der möglicherweise spröden Hitzeschutzschicht gewählt werden kann. Weiterhin kann die Schaufelauflage passend für einen schwer zugänglichen Oberflächenabschnitt der Schaufel gefertigt werden.

Eine Schaufel für eine Strömungsmaschine weist wenigstens einen Abschnitt einer Oberfläche der Schaufel mit einer Schaufelauflage nach einer der vorstehend beschriebenen Ausführungsformen auf.

Beispielsweise kann die Schaufelauflage eine der Produktdefinition entsprechende, einen ausreichenden Hitzeschutz gewährleistende Beschichtung auch an einem schwer zugänglichen Ort wie beispielsweise in einer an der Schaufelspitze angeordneten Nut aufweisen. Dies stellt einen ausreichenden Hitzeschutz sicher, gewährleistet eine ausreichende Lebensdauer und senkt den Verschleiß sowie wie die Wartungskosten der Strömungsmaschine.

Ein Verfahren zum Herstellen einer Schaufelauflage zum Aufbringen auf zumindest einen Abschnitt einer Oberfläche einer Schaufel für eine Strömungsmaschine weist die Schritte Erstellen einer Haftvermittlerschicht und Aufbringen einer Hitzeschutzschicht auf die Haftvermittlerschicht auf, wobei die Haftvermittlerschicht dazu eingerichtet ist, die Hitzeschutzschicht auf der Oberfläche der Schaufel zu halten, und die Hitzeschutzschicht dazu eingereicht ist, die Schaufel thermisch abzuschirmen.

Die Haftvermittler- und Hitzeschutzschicht können dabei wie oben beschrieben ausgestaltet sein. Das Verfahren ermöglicht es, eine mehrschichtige Schaufelauflage gemäß der Produktdefinition z.B. im Hinblick auf die Betriebsbedingungen für Gasturbinen und unabhängig von der Schaufeloberflächengeometrie herzustellen. Erst nachgelagert kann die Schaufelauflage dann auf den Schaufeloberflächenabschnitt aufgebracht und dort angefügt werden. Durch die Unabhängigkeit von der Schaufelgeometrie können Anforderungen an die Beschichtungen in der Schaufelauflage einfach und kostengünstig umgesetzt werden.

In einer Ausführungsform des Verfahrens kann die Haftvermittlerschicht und/oder die Hitzeschutzschicht mittels eines Strahlschmelzverfahrens erzeugt werden. Das Strahlschmelzverfahren kann beispielsweise ein selektives Laserschmelzen bzw. ein 3D-Drucken aufweisen.

Die Anwendung eines Strahlschmelzverfahrens ermöglicht es, die Schaufelauflage unabhängig von der Schaufel herzustellen, wobei vorbestimmte Schichtdicken sowie eine räumliche Ausgestaltung der Schaufelauflage einfach und kostengünstig umsetzbar sind.

In einer weiteren Ausführungsform kann die Schaufelauflage mit Hilfe des Strahlschmelzverfahrens direkt auf der Schaufel aufgebracht werden. Dann wird keine Fügeschicht benötigt.

Eine Variante des Verfahrens weist ein Aufbringen einer Fügeschicht auf einer von der Hitzeschutzschicht abgewandten Oberfläche der Haftvermittlerschicht auf, wobei die Fügeschicht dazu eingerichtet ist, die Haftvermittlerschicht auf die Oberfläche der Schaufel zu fügen. Wie bereits ausgeführt, kann die Fügeschicht einen Hochtemperaturkleber wie z.B. ein Hochtemperaturlot aufweisen.

Alternativ ist es auch möglich, die Fügeschicht nicht auf der Schaufelauflage, sondern auf dem mit der Schaufelauflage zu beschichtenden Oberflächenabschnitt der Schaufel vor dem Fügen anzubringen.

Eine Variante des Verfahrens weist ein Abtrennen eines Teils der Schaufelauflage mit einer flächigen Ausdehnung entsprechend der Ausdehnung des Abschnitts der Oberfläche der Schaufel auf.

Hierdurch wird ein Segment bzw. ein geometrisch dem Schaufeloberflächenabschnitt angepasster Abschnitt der Schaufelauflage erzeugt, welcher in einem Reparatur- oder Herstellungsverfahren einfach auf den zu beschichtenden Schaufeloberflächenabschnitt aufbringbar ist. Das Abtrennen kann beispielsweise durch Wasserstrahlschneiden, Laserschneiden oder Cut-Erodieren erreicht werden. Hierdurch wird eine gezielte Beschichtung z.B. einer Schaufelspitzennut oder einer schadhaften Stelle einer Schaufeloberflächenbeschichtung ermöglicht.

Ein Verfahren zur Reparatur einer Hitzeschutzschicht einer Schaufel einer Strömungsmaschine weist ein Aufbringen einer Schaufelauflage mit den oben dargelegten Eigenschaften auf wenigstens einen Abschnitt der Oberfläche der Schaufel auf.

In einer Variante dieser Ausführungsform kann das Verfahren zur Reparatur wenigstens einen der folgenden Schritte aufweisen: Abtrennen eines Teils der Schaufelauflage mit einer dem Abschnitt im Wesentlichen entsprechenden flächigen Ausdehnung und Anfügen der Schaufelauflage an dem Abschnitt mittels der Fügeschicht.

Das Abtrennen des Schaufelauflagensegments kann wie oben beschrieben vorgenommen werden. Das Anfügen der Schaufelauflage mittels der Fügeschicht kann, wenn diese ein Hochtemperaturlot aufweist, beispielsweise eine Hitzeanwendung über einen benötigten Zeitabschnitt, z.B. eine Dauer von 15 Minuten bis vier Stunden aufweisen. Diese kann auch im Rahmen einer von der Schaufeloberflächenreparatur unabhängigen Wärmebehandlung der Schaufel vorgenommen werden.

Durch das Reparaturverfahren wird eine gezielte Reparatur der Schaufelbeschichtung ermöglicht, so dass eine Schaufel mit beschädigter Oberfläche nicht ausgetauscht werden muss und die Lebensdauer der Schaufel verlängert wird. Weiterhin ist es möglich, im Rahmen einer Zwischeninspektion kleinere Reparaturen gleichsam "in situ" durchzuführen und so Wartungsintervalle zwischen kostenintensiveren Hauptinspektionen zu verlängern.

Durch das Verwenden eines passenden Schaufelauflagensegments erfordert die Reparatur nur wenig Material. Weiterhin kann eine kostengünstige MCrAlY-Legierung verwendet werden, da kein Aufsprühen der Haftvermittlerschicht notwendig ist. Gleichzeitig hat die Schaufelauflage dieselben günstigen Eigenschaften wie eine normale Beschichtung.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine Seitenansicht einer Schaufel für eine Strömungsmaschine,
- Figur 2: eine Schnittansicht einer Schaufelspitze der Schaufel,
- Figur 3: eine Schnittansicht durch eine Schaufelauflage,
- Figur 4: eine Schnittansicht durch eine Schaufelspitze mit daran geordneten Schaufelauflagen,
- Figur 5: ein Verfahren zum Herstellen einer Schaufelauflage,
- Figur 6: ein Verfahren zur Reparatur einer Hitzeschutzschicht einer Schaufel einer Strömungsmaschine.

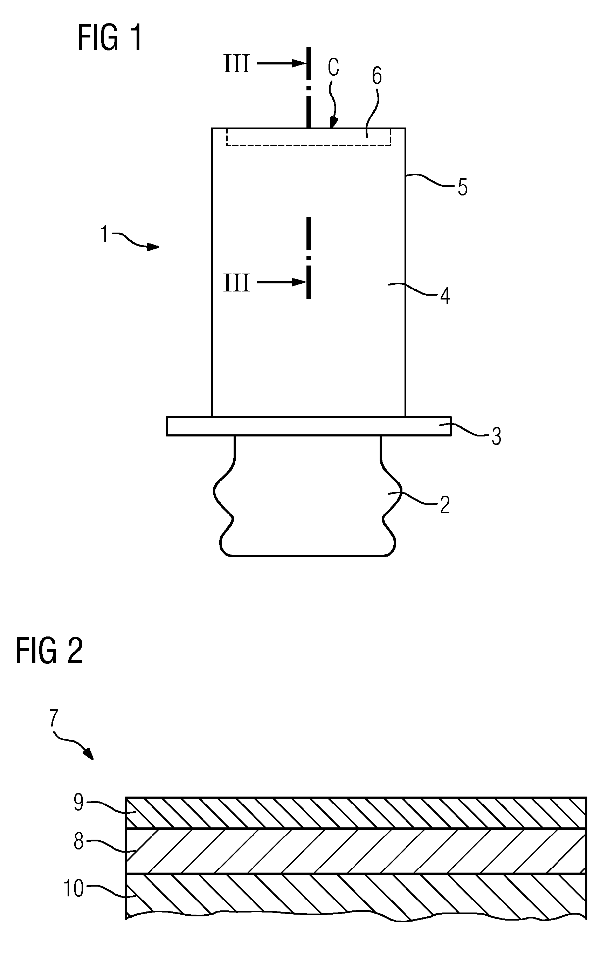

Wie aus Figur 1 ersichtlich, weist eine Schaufel 1 für eine Strömungsmaschine einen Schaufelfuß 2, eine Schaufelfußplatte 3, ein Schaufelblatt 4 und eine Schaufelspitze 5 am Schaufelblatt 4 auf. Der Schaufelfuß 2 weist ein Tannenbaumprofil auf, mit welchem die Schaufel 1 in einem Rotor einer Strömungsmaschine befestigbar ist. In einem Bereich C weist die Schaufelspitze 5 eine Nut 6 auf, die zwischen einem jeweils auf einer Druck- und einer Saugseite der Schaufel 1 vorstehenden Nutrand ausgebildet und der Schaufelkontur nachempfunden ist. Im Betrieb der Strömungsmaschine kontaktiert heißes Gas auf die Oberfläche des Schaufelblatts 4, wodurch hohe Oberflächentemperaturen besonders im Bereich der Schaufelspitze 5 auftreten.

In Figur 2 ist schematisch in einer Schnittansicht der Aufbau einer Schaufelauflage 7 gezeigt, welche im Rahmen eines Herstellungs- oder Reparaturverfahrens auf zumindest einen Abschnitt einer Oberfläche der Schaufel 1 aufbringbar ist. Die Schaufelauflage 7 weist eine beispielsweise metallische Haftvermittlerschicht 8 auf, die sich flächig beispielsweise in einer Ebene erstreckt. Sie kann eine MCrAlY-Legierung aufweisen und als Bondcoat (BC) bezeichnet werden. Auf der Haftvermittlerschicht ist eine beispielsweise ein keramisches Material aufweisende Hitzeschutzschicht 9 aufgebracht, die sich ebenso wie die Haftvermittlerschicht 8 mit einer vorbestimmten Dicke über die gesamte flächige Ausdehnung der Schaufelauflage 7 erstreckt. Die Hitzeschutzschicht 9 kann eine Mehrzahl von jeweils angrenzend aneinander angeordneten Hitzeschutzelementen aufweisen. Auf einer von der Hitzeschutzschicht 9 abgewandten Seite der Haftvermittlerschicht 8 ist eine Fügeschicht 10 angeordnet, die dazu eingerichtet ist, die Haftvermittlerschicht 8 auf die Oberfläche des Schaufelblatts 4 zu fügen.

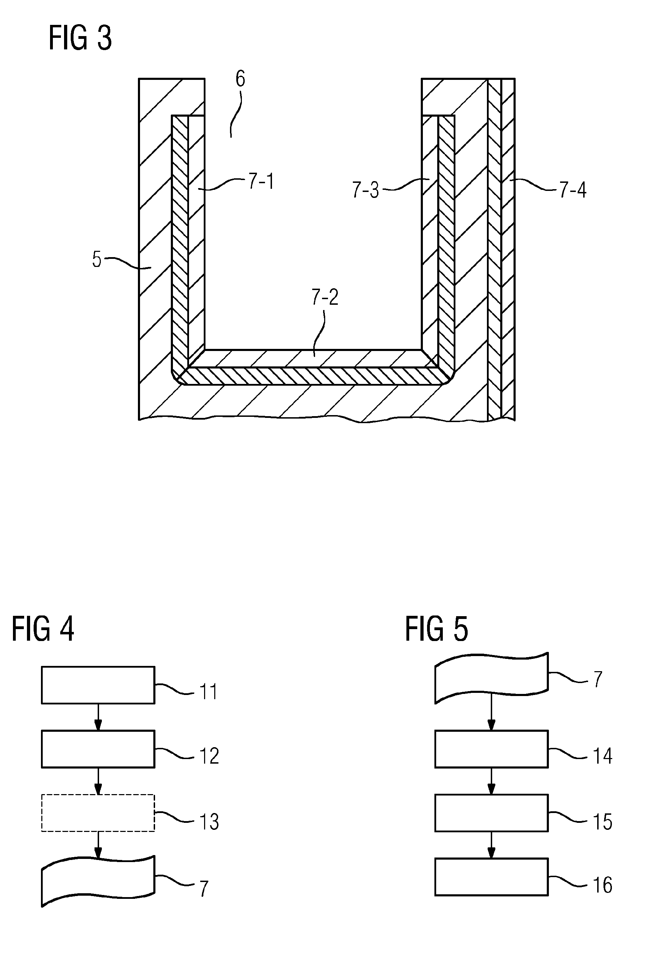

Figur 3 zeigt schematisch eine Schnittansicht der Schaufelspitze 5 mit der darin angeordneten Nut 6, wobei einzelne Segmente 7-1, 7-2, 7-3 und 7-4 der Schaufelauflage 7 im Inneren der Nut 6 und auf einer Seite der Schaufelspitze 5 aufgebracht sind. Die Schaufelauflagensegmente 7-1, 7-2, 7-3 und 7-4 sind den jeweiligen Schaufeloberflächenabschnitten in ihrer flächigen Ausdehnung und räumlichen Anordnung im Wesentlichen angepasst.

Figur 4 zeigt schematisch ein Verfahren zum Herstellen einer Schaufelauflage 7 mit Erstellen 11 einer Haftvermittlerschicht 8 und Aufbringen 12 einer Hitzeschutzschicht 9 auf der Haftvermittlerschicht 8. Die Haftvermittlerschicht 8 und/oder die Hitzeschutzschicht 9 können dabei mittels eines Strahlschmelzverfahrens, z.B. eines selektiven Laserschmelzverfahrens oder 3D-Druckens, erzeugt werden. Ein Aufbringen 13 der Fügeschicht 10 auf die von der Hitzeschutzschicht 9 abgewandte Oberfläche der Haftvermittlerschicht 8 ist optional (gestrichelte Darstellung). Erzeugnis des Herstellungsverfahrens ist die Schaufelauflage 7, die entweder der Oberflächengeometrie des zu beschichtenden Schaufelabschnitts angepasst oder unabhängig von der Form der Endkontur flexibel anpassbar als schaufelunabhängige Reparaturauflage ausgebildet ist. Die Schritte 11 bis 13 können folglich sowohl im Rahmen eines Herstellungsprozesses der Schaufel 1 als auch im Rahmen eines Herstellungsprozesses schaufelunabhängiger Schaufelauflagen 7 für Schaufelreparaturen durchgeführt werden.

Fig. 5 zeigt schematisch ein Beschichtungsverfahren für eine Schaufel, welches einerseits im Schaufelherstellungsprozess beim Schaufelhersteller, andererseits auch im Rahmen einer Reparatur bei einem Strömungsmaschinenbetreiber durchgeführt werden kann. Ein Abtrennen 14 eines Teils der Schaufelauflage 7 wird entsprechend einer flächigen Ausdehnung des zu beschichtenden oder zu reparierenden Schaufeloberflächenabschnitts durchgeführt und ermöglicht ein gezieltes Aufbringen 15 der Schaufelauflage 7 bzw. der Schaufelauflagensegmente 7-1, 7-2 und 7-3. Im Rahmen einer Wärmebehandlung 16 der Schaufel wird die Schaufelauflage 7 auf den zu beschichtenden oder zu reparierenden Schaufeloberflächenabschnitt gefügt.

Das Verfahren ermöglicht eine definitionsgemäße Beschichtung des Schaufelblatts 4 z.B. im Bereich der Schaufelspitze 5 und einer dort angeordneten Nut 6 in einem kostengünstigen Herstellprozess. Es ermöglicht weiterhin eine gezielte Reparatur einer schadhaften Beschichtung in einem Schaufeloberflächenabschnitt beispielsweise "in situ" während einer Zwischeninspektion. Hierdurch werden eine kostengünstige Herstellung, eine lange Lebensdauer sowie reduzierte Wartungskosten erreicht.

Obwohl die Erfindung im Detail durch bevorzugte Ausführungsbeispiele näher erläutert wurde, ist die Erfindung nicht durch die offenbarten Beispiele eingeschränkt. Andere Variationen können vom Fachmann hieraus abgeleitet werden, ohne den Schutzumfang der Erfindung zu verlassen.

## Patentansprüche

1. Schaufelauflage (7) zum Aufbringen auf zumindest einen Abschnitt einer Oberfläche einer Schaufel (1) für eine Strömungsmaschine, mit
einer Haftvermittlerschicht (8) und
einer auf der Haftvermittlerschicht (8) aufgebrachten Hitzeschutzschicht (9),
wobei die Haftvermittlerschicht (8) dazu eingerichtet ist, die Hitzeschutzschicht (9) auf der Oberfläche der Schaufel (1) zu halten, und die Hitzeschutzschicht dazu eingerichtet ist, die Schaufel thermisch abzuschirmen.

2. Schaufelauflage (7) gemäß Anspruch 1,
mit einer auf einer von der Hitzeschutzschicht (9) abgewandten Oberfläche der Haftvermittlerschicht (8) angeordneten Fügeschicht (10),
wobei die Fügeschicht (10) dazu eingerichtet ist, die Haftvermittlerschicht (8) auf die Oberfläche der Schaufel (1) zu fügen.

3. Schaufelauflage (7) gemäß Anspruch 1 oder 2,
wobei die Haftvermittlerschicht (8) und/oder die Hitzeschutzschicht (9) jeweils eine vorbestimmte Schichtdicke aufweisen.

4. Schaufelauflage (7) gemäß einem der vorstehenden Ansprüche,
wobei die Haftvermittlerschicht (8) biegbar ist, und
die Hitzeschutzschicht (9) eine Mehrzahl von auf der Haftvermittlerschicht aneinander angrenzend angeordneten Hitzeschutzelementen aufweist.

5. Schaufelauflage (7) gemäß Anspruch 4,
wobei die Hitzeschutzelemente innerhalb der Hitzeschutzschicht (9) eine polygonale Form aufweisen.

6. Schaufelauflage (7) gemäß einem der vorstehenden Ansprüche,
wobei zwischen der Hitzeschutzschicht (9) und der Haftvermittlerschicht (8) wenigstens eine Übergangsschicht angeordnet ist,
wobei die Übergangsschicht ein vorbestimmtes Mischungsverhältnis eines Materials der Hitzeschutzschicht (9) und eines Materials der Haftvermittlerschicht (8) hat.

7. Schaufelauflage (7) gemäß Anspruch 6,
wobei die Übergangsschicht mit zunehmendem Abstand von der Haftvermittlerschicht (8) einen abnehmenden Anteil des Materials der Haftvermittlerschicht (8) und einen zunehmenden Anteil des Materials der Hitzeschutzschicht (9) aufweist.

8. Schaufelauflage (7) gemäß einem der vorstehenden Ansprüche,
wobei eine räumliche Anordnung der Haftvermittlerschicht (8) und/oder der Hitzeschutzschicht (9) den Abschnitt der Oberfläche der Schaufel (1) im Wesentlichen nachbildet.

9. Schaufel (1) für eine Strömungsmaschine,
wobei wenigstens ein Abschnitt einer Oberfläche der Schaufel (1) eine Schaufelauflage (7) nach Anspruch 1 aufweist.

10. Verfahren zum Herstellen einer Schaufelauflage (7) zum Aufbringen auf zumindest einen Abschnitt einer Oberfläche einer Schaufel (1) für eine Strömungsmaschine,
mit Erstellen (11) einer Haftvermittlerschicht (8),
und Aufbringen (12) einer Hitzeschutzschicht (9) auf die Haftvermittlerschicht (8),
wobei die Haftvermittlerschicht (8) dazu eingerichtet ist, die Hitzeschutzschicht (9) auf der Oberfläche der Schaufel (1) zu halten, und die Hitzeschutzschicht (9) dazu eingerichtet ist, die Schaufel (1) thermisch abzuschirmen.

11. Verfahren gemäß Anspruch 10,
wobei die Haftvermittlerschicht (8) und/oder die Hitzeschutzschicht (9) mittels eines Strahlschmelzverfahrens erzeugt werden.

12. Verfahren gemäß Anspruch 10 oder 11,
mit Aufbringen (13) einer Fügeschicht (10) auf einer von der Hitzeschutzschicht (9) abgewandten Oberfläche der Haftvermittlerschicht (8),
wobei die Fügeschicht (10) dazu eingerichtet ist, die Haftvermittlerschicht (8) auf die Oberfläche der Schaufel (1) zu fügen.

13. Verfahren gemäß einem der Ansprüche 10 bis 12,
mit Abtrennen eines Teils der Schaufelauflage (7) mit einer flächigen Ausdehnung entsprechend der Ausdehnung des Abschnitts der Oberfläche der Schaufel (1).

14. Verfahren zur Reparatur einer Hitzeschutzschicht (9) einer Schaufel (1) einer Strömungsmaschine,
mit Aufbringen (15) einer Schaufelauflage (7) gemäß Anspruch 1 auf wenigstens einen Abschnitt einer Oberfläche der Schaufel (1).

15. Verfahren gemäß Anspruch 14,
aufweisend wenigstens einen der Schritte
Abtrennen (14) eines Teils (7-1, 7-2, 7-3, 7-4) der Schaufelauflage (7) mit einer dem Abschnitt im Wesentlichen entsprechenden flächigen Ausdehnung,
und Anfügen der Schaufelauflage (7) und/oder des Teils (7-1, 7-2, 7-3, 7-4) der Schaufelauflage (7) an dem Abschnitt mittels der Fügeschicht (10).
